# EUROPÄISCHE PATENTSCHRIFT

(11) **EP 2 390 776 B1**
(45) Veröffentlichungstag und Bekanntmachung des Hinweises auf die Patenterteilung: **07.11.2018**
(21) Anmeldenummer: 11166341.5
(22) Anmeldetag: 17.05.2011
(51) Int. Cl.: G06F 3/0481, G06F 3/0484

(54) **Bedienvorrichtung für eine Nutzerschnittstelle**
Operating device for a user interface
Dispositif de commande pour une interface utilisateur

(30) Priorität: 27.05.2010 DE 202010007315 U
(43) Veröffentlichungstag der Anmeldung: 30.11.2011
(73) Patentinhaber: Omikron Data Quality GmbH, 75177 Pforzheim (DE)
(72) Erfinder: Kraus, Carsten, 75173 Pforzheim (DE); Karayel, Emin, 75173 Pforzheim (DE)
(74) Vertreter: Reitstötter Kinzebach

(56) Entgegenhaltungen:
- JP-A- 2009 259 045
- US-A1- 2008 120 565

## Beschreibung

Die vorliegende Erfindung betrifft eine Bedienvorrichtung für eine Nutzerschnittstelle und ein Verfahren zum Erzeugen eines Steuersignals über eine Nutzerschnittstelle. Die Bedienvorrichtung umfasst Bedienelemente und eine Steuervorrichtung, mittels welcher in Abhängigkeit vom Zustand der Bedienelemente zumindest ein Steuersignal erzeugt werden kann.

Bekannt sind beispielsweise Bedienvorrichtungen mit mechanischen Bedienelementen, wie beispielsweise Drehstellern oder Tastschaltern, die ein elektrisches Signal erzeugen, welches von einer Steuervorrichtung in ein Steuersignal für eine zu bedienende Einrichtung umgewandelt wird.

Des Weiteren ist es bekannt, bei einer graphischen Benutzerschnittstelle Bedienelemente auf einer Anzeigefläche anzuzeigen. Diese Bedienelemente können mittels einer Eingabevorrichtung, die beispielsweise eine Cursorsteuerung umfassen kann, betätigt werden. Die Betätigung auf der Anzeigefläche mittels der Eingabevorrichtung wird von der Steuervorrichtung erfasst und in ein Steuersignal für die zu bedienende Einrichtung umgewandelt. Die zu bedienende Einrichtung kann eine externe Einrichtung sein oder die Anzeigevorrichtung selbst.

Ferner ist aus der JP 2009 259045 A ein Verfahren bekannt, bei dem ein Intervall durch die Überlappung zweier geometrischer Figuren erfasst wird. Relativ zu einem Referenzkreis wird ein bewegliches Graphikobjekt verschoben. Durch die Überlappung der beiden graphischen Figuren wird ein Segment des Referenzkreises markiert und als Intervall gewählt.

Der vorliegenden Erfindung liegt die Aufgabe zugrunde, eine Bedienvorrichtung und ein Verfahren der eingangs genannten Art bereitzustellen, welche sich vom Nutzer sehr einfach und intuitiv betätigen lassen, um ein gewünschtes Steuersignal zu erzeugen.

Diese Aufgabe wird erfindungsgemäß durch eine Bedienvorrichtung mit den Merkmalen des Anspruchs 1 und ein Verfahren mit den Merkmalen 9 gelöst. Vorteilhafte Ausgestaltungen und Weiterbildungen ergeben sich aus den abhängigen Ansprüchen.

Die erfindungsgemäße Bedienvorrichtung umfasst ein erstes mindestens zweidimensionales Element und ein zweites längliches Element, die relativ zueinander in zumindest zwei verschiedenen Richtungen verschiebbar sind. Dabei ist die Längserstreckung des länglichen Elements einer geordneten Gesamtmenge zugeordnet. Ferner umfasst die Bedienvorrichtung eine Steuervorrichtung, mittels welcher anhand der relativen Position des zweiten länglichen Elements zu dem ersten mindestens zweidimensionalen Element eine Überlappung beider Elemente erfassbar ist und in Abhängigkeit von dieser Überlappung zumindest ein Steuersignal mit Intervallwerten erzeugbar ist. Dabei definieren die Intervallwerte eine Teilmenge innerhalb der Gesamtmenge.

Unter einer Überlappung wird im Sinne der Erfindung verstanden, dass aufgrund der relativen Anordnung der beiden Elemente zueinander ein Abschnitt auf dem länglichen Element festgelegt werden kann, wobei die Größe und die Position des Abschnitts von der relativen Position der beiden Elemente zueinander abhängt.

Gemäß einer Ausgestaltung der erfindungsgemäßen Bedienvorrichtung umfassen die Intervallwerte des Steuersignals eine Intervallbreite, die von der Größe der Überlappung des ersten mindestens zweidimensionalen Elements und des zweiten länglichen Elements in Längsrichtung des länglichen Elements abhängt. Ferner können die Intervallwerte des Steuersignals eine Intervallposition umfassen, die von der Position der Überlappung des ersten mindestens zweidimensionalen Elements auf dem zweiten länglichen Element abhängt. Die Intervallposition und die Intervallbreite können somit ein Intervall definieren. Ferner ist es auch möglich, dass die Intervallwerte des Steuersignals die zwei Grenzen des Intervalls mittels der Überlappung des ersten mindestens zweidimensionalen Elements und des zweiten länglichen Elements definieren.

Da die Längserstreckung des länglichen Elements einer geordneten Gesamtmenge zugeordnet ist, kann durch die Intervallwerte des Steuersignals, die sich aus der Überlappung der beiden Elemente ergeben, die Teilmenge der Gesamtmenge definiert werden.

Bei der erfindungsgemäßen Bedienvorrichtung ist es somit möglich, dass durch eine einzige Bewegung eines der beiden Elemente, zum Beispiel das erste mindestens zweidimensionale Element, verschoben wird und durch die Festlegung der relativen Position der beiden Elemente zueinander zwei Werte für das Steuersignal festgelegt werden. Die beiden Werte können ein bestimmtes Intervall vollständig definieren.

Gemäß einer weiteren Ausgestaltung der erfindungsgemäßen Bedienvorrichtung ist das erste Element ein zweidimensionales flächiges Element. Anhand der Überlappung des flächigen Elements und des zweiten länglichen Elements kann auf ein Abschnitt auf dem zweiten länglichen Element definiert sein. Die Intervallwerte des Steuersignals hängen in diesem Fall von der Größe und der Position des Abschnitts innerhalb des zweiten länglichen Elements ab. Durch die Verschiebung des flächigen Elements oder des länglichen Elements lässt sich somit die Überlappung der beiden Elemente verändern. Anhand der relativen Position der beiden Elemente und der sich daraus ergebenden Überlappung wird dem Nutzer bei der erfindungsgemäßen Bedienvorrichtung visualisiert, was für ein Steuersignal von der Steuervorrichtung erzeugt wird. Das längliche Element und das flächige Element überlappen sich insbesondere nur teilweise, wobei die Größe der Überlappung in Abhängigkeit von der relativen Position der beiden Elemente zueinander variabel ist.

Ferner kann das flächige Element relativ zu dem länglichen Element so verschoben werden, dass sich das längliche Element im wesentlichen vollständig innerhalb des flächigen Elements befindet. In diesem Fall entsprechen die Intervallwerte der Gesamtmenge, die dem länglichen Element zugeordnet ist. Andererseits können die beiden Elemente auch so positioniert werden, dass sich das längliche Element vollständig außerhalb des flächigen Elements befindet. In diesem Fall entsprechen die Intervallwerte der leeren Menge, d. h. das Intervall enthält keine Werte.

Das flächige Element ist insbesondere so ausgestaltet, dass sich die Quererstreckung in einer Richtung fortwährend vergrößert oder verkleinert. Wird somit das flächige Element auf dem länglichen Element in einer zur Quererstreckung des flächigen Elements senkrechten Richtung verschoben, vergrößert bzw. verkleinert sich die Überlappung der beiden Elemente fortwährend. Wird andererseits das flächige Element in Querrichtung verschoben, verändert sich die Position der Überlappung auf dem länglichen Element, nicht jedoch die Größe der Überlappung.

Das flächige Element ist insbesondere ein Dreieck. Das längliche Element ist in diesem Fall insbesondere parallel zu einer Seite des Dreiecks des flächigen Elements ausgerichtet. Diese Ausrichtung bleibt bevorzugt auch erhalten, wenn die relative Position der beiden Elemente zueinander verändert wird.

Bei dem Dreieck des flächigen Elements kann es sich beispielsweise um ein gleichschenkliges, insbesondere ein rechtwinkliges Dreieck handeln. Das längliche Element ist in diesem Fall insbesondere parallel zu der Basis bzw. der Hypotenuse des dreieckigen Elements ausgerichtet. Die Länge des länglichen Elements kann dabei der Länge der Basis bzw. der Hypotenuse des Dreiecks des flächigen Elements entsprechen. Das längliche Element kann jedoch auch länger als die Basis bzw. die Hypotenuse des Dreiecks des flächigen Elements sein.

Gemäß einer anderen Ausgestaltung der erfindungsgemäßen Bedienvorrichtung umfasst das flächige Element beispielsweise einen Halbkreis oder eine Halbellipse. Auch in diesem Fall vergrößert bzw. verkleinert sich die Quererstreckung des flächigen Elements, wenn man sich auf einer Achse des Halbkreises bzw. der Halbellipse bewegt.

Gemäß einer Ausgestaltung der erfindungsgemäßen Bedienvorrichtung sind das flächige Element und das zweite längliche Element relativ zueinander in einer Ebene zumindest in Längsrichtung des zweiten länglichen Elements sowie der dazu senkrechten Richtung verschiebbar, wobei die Ausrichtung der beiden Elemente zueinander bei der Verschiebung erhalten bleibt.

Unter einem länglichen Element im Sinne der Erfindung wird ein beliebiges Element in einer zweidimensionalen Fläche oder einem dreidimensionalen Raum verstanden, welches eine Längserstreckung definiert. Es handelt sich somit insbesondere um ein im Wesentlichen eindimensionales Element, welches auf einer zweidimensionalen Fläche oder im dreidimensionalen Raum angeordnet ist. Um das längliche Element jedoch besser gestalten oder visualisieren zu können, kann es in Richtung quer zur Längserstreckung auch eine Ausdehnung aufweisen, so dass dieses Element auch als Balken, Streifen, Linie oder Skala ausgebildet sein kann. Das längliche Element ist zwar bevorzugt gerade, es ist jedoch auch möglich, dass das längliche Element Krümmungen aufweist.

Bei der erfindungsgemäßen Bedienvorrichtung werden als Bedienelemente somit zwei sich überlappende geometrische Figuren bereitgestellt. Durch die Überlappung wird durch das zumindest zweidimensionale Element, d. h. insbesondere des flächige Element bzw. das Dreieck, ein Abschnitt auf dem länglichen Element definiert. Durch die Wahl dieses Abschnitts kann der Nutzer bei der Positionierung der beiden Elemente zueinander besonders einfach und intuitiv die Intervallwerte festlegen. Gleichzeitig werden durch die Darstellung der Elemente die Intervallwerte des Steuersignals so visualisiert, dass sie vom Nutzer schnell und intuitiv erfasst werden können.

Bei dem länglichen und dem zumindest zweidimensionalen Element kann es sich um mechanische Bedienelemente handeln, die vom Nutzer relativ zueinander verschoben werden können. Bevorzugt umfasst die erfindungsgemäße Bedienvorrichtung jedoch eine Anzeigefläche, mittels welcher das flächige und das längliche Element anzeigbar sind. Ferner umfasst die erfindungsgemäße Bedienvorrichtung bevorzugt eine Eingabevorrichtung, mittels welcher das flächige und das längliche Element relativ zueinander verschiebbar sind.

Bei der Eingabevorrichtung kann es sich beispielsweise um eine Cursorsteuerung handeln, mittels welcher die angezeigten Elemente oder eines der angezeigten Elemente verschoben werden können. Für die Cursorsteuerung kann ein mechanisches Betätigungselement oder eine berührungsempfindliche Fläche, d.h. ein sogenanntes Touchpad, vorgesehen sein. Des Weiteren kann auf der Anzeigefläche eine berührungsempfindliche Oberfläche vorgesehen sein, so dass ein sogenannter Touchscreen bereitgestellt wird. In diesem Fall kann der Nutzer die berührungsempfindliche Oberfläche bei der Position berühren, bei welcher eines der Elemente angezeigt wird. Verschiebt der Nutzer dann die Berührposition auf der berührungsempfindlichen Oberfläche, wird von der Steuervorrichtung auch die Anzeige auf der Anzeigefläche so verändert, dass das entsprechende Element verschoben wird. Wenn der Nutzer danach die Berührung von der berührungsempfindlichen Oberfläche löst, kann die Steuervorrichtung das Steuersignal in Abhängigkeit von der relativen Position der beiden Elemente zueinander erzeugen und gegebenenfalls ausgeben.

Gemäß einer Weiterbildung der erfindungsgemäßen Bedienvorrichtung ist das flächige Element in Abhängigkeit von der Betätigung der Eingabevorrichtung zumindest teilweise ein- und/oder ausblendbar ist. Die Anzeigefläche ist insbesondere z. B. von der Steuervorrichtung so ansteuerbar, dass das flächige Element zumindest teilweise angezeigt wird, wenn es mittels der Eingabevorrichtung betätigt wird. Wenn das flächige Element nicht betätigt wird, wird es in diesem Fall auch nicht angezeigt. Beispielsweise kann nur der Teil des flächigen Elements angezeigt werden, der mit dem länglichen Element überlappt, wenn es mittels der Eingabevorrichtung betätigt wird. Ferner wäre es möglich, dass - ggf. nach einigen Bedienvorgängen - das flächige Element überhaupt nicht mehr vollständig angezeigt wird, sondern nur noch die Überlappung mit dem länglichen Element, die entsprechenden Betätigungen der Eingabevorrichtung jedoch weiterhin bewirken, dass das Steuersignal mit den Intervallwerten erzeugt wird.

Die Erfindung umfasst ferner ein Verfahren zum Erzeugen eines Steuersignals über eine Nutzerschnittstelle. Bei dem Verfahren werden ein erstes flächiges Element und ein zweites längliches Element auf einer Anzeigefläche angezeigt. Das erste und das zweite Element werden mittels einer Eingabevorrichtung relativ zueinander so verschoben, dass sich eine Überlappung der beiden Elemente ergibt, die von einer Steuervorrichtung erfasst wird. Die Steuervorrichtung erzeugt dann in Abhängigkeit von der Überlappung des ersten und des zweiten Elements zumindest ein Steuersignal mit Intervallwerten. Das Steuersignal mit den Intervallwerten kann dann ausgegeben werden.

Das Verfahren kann insbesondere von der vorstehend beschriebenen Bedienvorrichtung implementiert werden, so dass in dem Verfahren alle Merkmale dieser Bedienvorrichtung verwirklicht werden können.

Die Erfindung wird nun anhand eines Ausführungsbeispiels mit Bezug zu den Figuren erläutert.

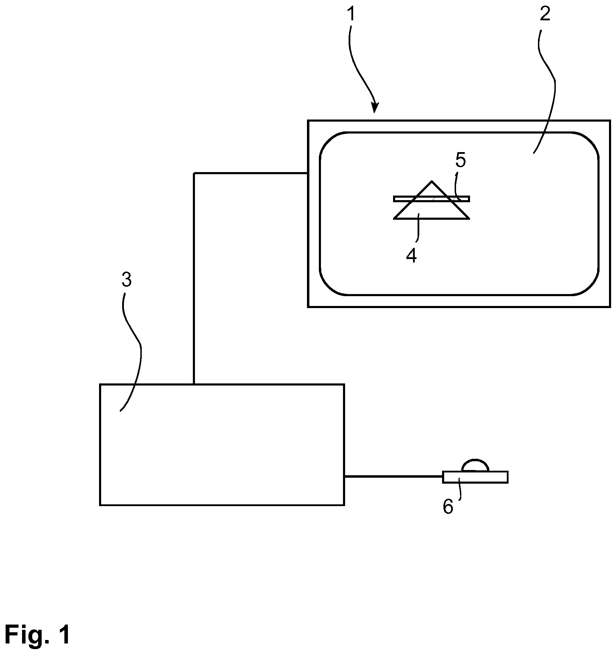

- Figur 1: zeigt schematisch den Aufbau der erfindungsgemäßen Bedienvorrichtung und
- Die Figuren 2 - 5: zeigen Beispiele für Positionierungen des länglichen Elements und des flächigen Elements des Ausführungsbeispiels der erfindungsgemäßen Bedienvorrichtung.

Bei dem im Folgenden beschriebenen Ausführungsbeispiel der erfindungsgemäßen Bedienvorrichtung und dem dazugehörigen Verfahren zum Erzeugen eines Steuersignals ist das erste mindestens zweidimensionale Element ein flächiges Element in Form eines rechtwinkligen oder gleichschenkligen Dreiecks, welches auf einer Anzeigefläche angezeigt wird. Es wird jedoch darauf hingewiesen, dass es sich bei diesem Element auch um ein dreidimensionales Element handeln könnte, welches im dreidimensionalen Raum oder als Projektion auf eine zweidimensionale Fläche dargestellt werden könnte. Ferner könnte das Element statt eines Dreiecks auch eine beliebige andere geometrische Form aufweisen. Außerdem muss es sich nicht notwendigerweise um ein rechtwinkliges oder gleichschenkliges Dreieck handeln. Es könnte auch ein beliebiges Dreieck mit jeweils verschiedenen Seitenlängen angezeigt werden.

Die Bedienvorrichtung umfasst eine Anzeigevorrichtung 1 mit einer Anzeigefläche 2. Die Anzeigefläche 2 kann beispielsweise von einem an sich bekannten frei programmierbaren Matrixdisplay, beispielsweise einem Flüssigkristalldisplay, bereitgestellt werden. Die Anzeigevorrichtung 1 ist mit einer Steuervorrichtung 3 gekoppelt, welche Graphikdaten für die Anzeige auf der Anzeigefläche 2 erzeugt. Mittels der Steuervorrichtung 3 kann auf der Anzeigefläche 2 insbesondere eine Anzeige mit dem dreieckigen Element 4 und einem länglichen Element 5 erzeugt werden. Das dreieckige Element 4 ist insbesondere ein gleichschenkliges Dreieck. In dem hier gezeigten Beispiel ist das dreieckige Element 4 ein rechtwinkliges Dreieck.

Des Weiteren umfasst die Bedienvorrichtung eine Eingabevorrichtung 6. Mittels dieser Eingabevorrichtung 6 kann der Nutzer die relative Position des auf der Anzeigefläche 2 angezeigten dreieckigen Elements 4 zu dem länglichen Element 5 verschieben. Bei der Eingabevorrichtung 6 kann es sich beispielsweise um eine elektronische Maus oder ein berührungsempfindliches Feld handeln, die in Verbindung mit der Steuervorrichtung 3 eine Cursorsteuerung bereitstellen, durch welche der Nutzer auf der Anzeigefläche 2 angezeigte Elemente verschieben kann. Alternativ könnte die Eingabevorrichtung 6 eine berührungsempfindliche Oberfläche auf der Anzeigefläche 2 umfassen. In diesem Fall wird ein an sich bekannter Touchscreen bereitgestellt.

Die Steuervorrichtung 3 erfasst die vom Nutzer festgelegte relative Position des dreieckigen Elements 4 zu dem länglichen Element 5 und erzeugt in Abhängigkeit von dieser relativen Position der beiden Elemente 4 und 5 zueinander ein Steuersignal oder mehrere Steuersignale. Die Steuersignale kann die Steuervorrichtung 3 dann an eine externe zu bedienende Einrichtung ausgeben oder zur Steuerung der Anzeigevorrichtung 1 verwenden.

Durch die Elemente 4 und 5 wird somit ein Steuerelement für eine graphische Benutzeroberfläche bereitgestellt. Durch die Eingabevorrichtung 6 kann der Nutzer das längliche Element 5 und/oder das dreieckige Element 4 auswählen, d. h. zum Beispiel anklicken, und relativ zu dem jeweils anderen Element verschieben.

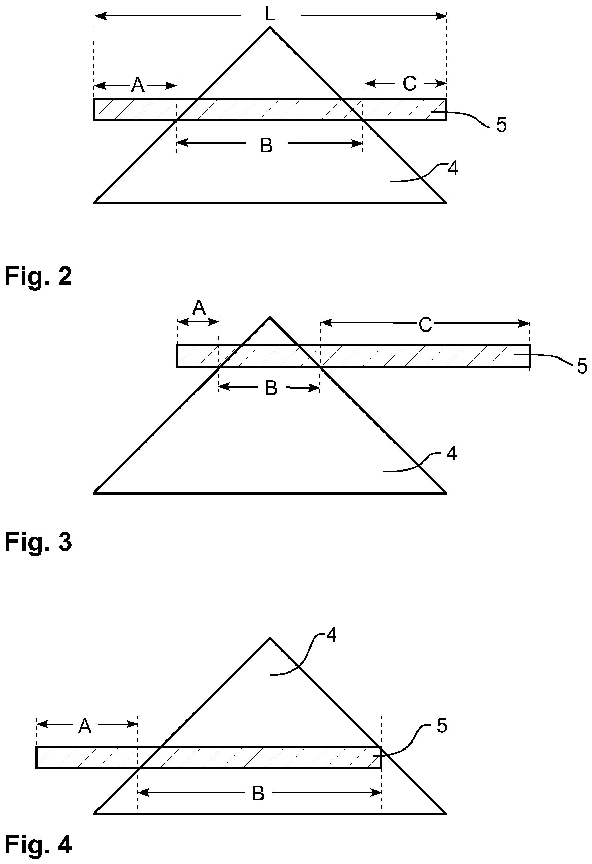

Mit Bezug zu den Figuren 2-5 wird erläutert, wie der Nutzer durch die Wahl der relativen Position der beiden Elemente 4 und 5 zueinander Steuersignale mit Intervallwerten erzeugen kann:
Das dreieckige Element 4 kann in bestimmten Grenzen relativ zu dem in diesem Beispiel ortsfest angezeigten länglichen Element 5 positioniert werden. In dem hier beschriebenen Beispiel kann das dreieckige Element 4 in Längsrichtung soweit von dem länglichen Element 5 weg verschoben werden, dass es sich vollständig außerhalb des länglichen Elements 5 befindet. In diesem Fall überlappen bzw. überdecken sich die beiden Elemente 4 und 5 nicht. In einem anderen Grenzfall ist das längliche Element 5 vollständig innerhalb des dreieckigen Elements 4 positioniert. Zwischen diesen beiden Grenzfällen kann das dreieckige Element 4 so auf dem länglichen Element 5 positioniert werden, dass sich ein überlappender Abschnitt der Länge B ergibt. Auf der linken Seite des länglichen Elements 5 ergibt sich ein Abschnitt der Länge A, der das dreieckige Element 4 nicht überlappt. Ferner ergibt sich auf der anderen, rechten Seite ein Abschnitt der Länge C, der das dreieckige Element 4 nicht überlappt. Die Längen A, B und C dieser Abschnitte des länglichen Elements 5 ergeben insgesamt die Länge L des länglichen Elements 5, welche im hier gezeigten Fall der Länge der Hypotenuse des Dreiecks des Elements 4 entspricht.

Gleichermaßen ist es möglich, statt des dreieckigen Elements 4 das längliche Element 5 zu verschieben. Wichtig ist nur, dass sich die relative Position der beiden Elemente 4 und 5 zueinander verändert.

Das längliche Element 5 ist in seiner Längsrichtung parallel zu der Hypotenuse des dreieckigen Elements 4 ausgerichtet. Wenn die Elemente 4 und 5 auf der Anzeigefläche 2 relativ zueinander verschoben werden, bleibt die parallele Ausrichtung der Längsrichtung des länglichen Elements 5 zu der Hypotenuse des dreieckigen Elements 4 erhalten.

Dem länglichen Element 5 kann eine bestimmte Gesamtmenge oder ein Wertebereich zugeordnet werden. Im Folgenden wird als Beispiel angenommen, der Länge L des länglichen Elements 5 ist ein Wertebereich der Zahlen 0 bis 100 zugeordnet. Durch die Positionierung des dreieckigen Elements 4 relativ zu dem länglichen Element 5 kann der Nutzer nun ein bestimmtes Intervall bzw. eine bestimmte Teilmenge in diesem Wertebereich festlegen. Die Länge B des Abschnitts des länglichen Elements 5, welcher mit dem dreieckigen Element 4 überlappt, legt dabei die Größe bzw. Breite des Intervalls fest. Die ausgewählte Intervallbreite entspricht dabei dem Verhältnis der Länge B zur Gesamtlänge L des länglichen Elements 5. Ist die Länge B z. B. ein Viertel der Gesamtlänge L, ist die Intervallbreite 25.

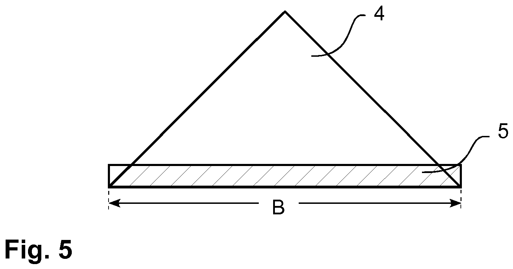

Der Nutzer kann nun die Intervallbreite verändern, indem er mittels der Eingabevorrichtung 6 das dreieckige Element 4 senkrecht zur Längsrichtung des länglichen Elements 5, d.h. bei der Darstellung gemäß den Figuren 2-5 nach oben oder nach unten, verschiebt. Befindet sich das längliche Element 5 wie in Figur 5 gezeigt ganz unten auf der Hypotenuse des dreieckigen Elements 4, ist der gesamte Wertebereich ausgewählt. Wird das dreieckige Element 4 weiter nach unten bewegt, verändert sich die Länge B des Abschnitts des länglichen Elements 5, welcher das dreieckige Element 4 überlappt, wie es in den Figuren 2-4 gezeigt ist.

Durch die Positionierung des dreieckigen Elements 4 kann der Nutzer jedoch nicht nur die Intervallgröße bzw. Intervallbreite festlegen, sondern auch die Intervallgrenzen definieren. Bewegt der Nutzer nämlich das dreieckige Element 4 in Längsrichtung des länglichen Elements 5, d.h. bei der Darstellung gemäß den Figuren 2-5 nach rechts oder nach links, verändern sich die Längen der Abschnitte A und C des länglichen Elements 5, die nicht das dreieckige Element 4 überlappen. Durch die Verhältnisse der Längen A, B und C des länglichen Elements 5 kann auf diese Weise proportional festgelegt werden, welche Intervallgrenzen innerhalb des Wertebereichs, welcher der Länge L des länglichen Elements 5 zugeordnet ist, ausgewählt werden. Ist z. B. bei der Anordnung der beiden Elemente 4 und 5 gemäß Figur 3 die Länge A ein zehntel der Gesamtlänge L, beginnt das Intervall bei dem Wert 10. Die Steuervorrichtung 3 kann in Abhängigkeit von den durch die Positionierung der Elemente 4 und 5 festgelegten Intervallgrenzen und der dadurch festgelegten Intervallbreite ein Steuersignal oder mehrere Steuersignale erzeugen und ggf. ausgeben.

Die durch die relative Positionierung der beiden Elemente 4 und 5 definierte Auswahl kann ergänzend noch durch eine separate digitale Anzeige angezeigt werden. Alternativ oder zusätzlich kann auf dem länglichen Element 5 auch eine Skala angeordnet sein, anhand derer der Betrachter die Auswahl ablesen kann.

Es wird darauf hingewiesen, dass das längliche Element 5 auch anders ausgebildet sein kann. Durch das längliche Element 5 muss jedoch eine Längserstreckung definiert sein, welche bei der Positionierung relativ zu dem dreieckigen Element 4 einen variablen Abschnitt definiert, der das dreieckige Element 4 überlappt. Das längliche Element 5 kann somit z. b. als Balken, Streifen, Linie oder Skala ausgestaltet sein.

Des Weiteren ist es nicht erforderlich, dass die Längserstreckung L des länglichen Elements 5 der Länge einer Seite des dreieckigen Elements 4 entspricht. Das längliche Element 5 könnte insbesondere auch länger sein. In diesem Fall wäre es beispielsweise nicht möglich, die Gesamtmenge auszuwählen, welche der Länge des länglichen Elements 5 zugeordnet ist. Es könnte dann nur eine echte Teilmenge ausgewählt werden.

Die erfindungsgemäße Bedienvorrichtung kann beispielsweise in Verbindung mit einem online-Shop eingesetzt werden, wobei durch die Positionierung der beiden Elemente 4 und 5 durch eine einzige Bewegung eines der Elemente 4, 5 individuelle Preisgrenzen eingegeben werden können. Des Weiteren kann das Steuersignal bzw. die Steuersignale, welche mittels der Steuervorrichtung 3 durch die Positionierung der beiden Elemente 4 und 5 erzeugt werden, dazu verwendet werden, Bildschirmgrößen, Batterielaufzeiten oder ähnliche Intervalle festzulegen.

Gemäß einer Weiterbildung der erfindungsgemäßen Bedienvorrichtung und des zugehörigen Verfahrens ist für das aus den beiden Elementen 4 und 5 gebildete Steuerelement ein aktiver und ein passiver Zustand definiert. Eine Aktivierung des Steuerelements kann beispielsweise dadurch bewirkt werden, dass eine Markierung mittels der Eingabevorrichtung 6 in die Nähe des Steuerelements bewegt wird. Im aktivierten Zustand ist das Steuerelement wie in den Figuren 2 - 5 gezeigt dargestellt. Im deaktivierten Zustand, d.h. wenn beispielsweise die Markierung (Cursor) von den Elementen 4 und 5 wegbewegt worden ist, kann der Bereich außerhalb des länglichen Elements 5 vorübergehend ausgeblendet werden. Auf diese Weise kann der auf der Anzeigefläche 2 zur Verfügung stehende Platz optimal genutzt werden. Klickt der Nutzer mittels der Markierung den im deaktivierten Zustand angezeigten Bereich des Steuerelements an, werden die beiden Elemente 4 und 5 wieder vollständig angezeigt und die relative Position dieser beiden Elemente 4 und 5 zueinander kann vom Nutzer mittels der Eingabevorrichtung 6 verändert werden.

Gemäß einer anderen Weiterbildung der erfindungsgemäßen Bedienvorrichtung und des zugehörigen Verfahrens ist das Dreieck des flächigen Elements 4 nur sichtbar, wenn es gerade bedient wird. In diesem Fall können mehrere verschiedene flächige Elemente 4 in Verbindung mit dem länglichen Element 5 gleichzeitig zum Einsatz kommen, z.B. bei einem online-Shop für Fernseher zur Auswahl der Intervallwerte für den Preis, die Größe, die Auflösung und die Frequenz. Durch das Ausblenden der gerade inaktiven Dreiecke der flächigen Elemente 4 können mehrere Intervalle übereinander in dem gleichen Bereich angeordnet werden. Schließlich ist es möglich, dass das flächige Element 4 - sobald sich ein Nutzer allgemein an das Steuerelement gewöhnt hat - überhaupt nicht mehr angezeigt wird, sondern nur noch gedacht wird, oder nur noch die Überlappung angezeigt wird: Auf- und Abwärtsbewegungen mittels der Eingabevorrichtung 6 verbreitern dann das Intervall, Links-/Rechtsbewegungen verschieben es in gleicher Weise, wie vorstehend bei der Anzeige des flächigen Elements 4 beschrieben.

## Patentansprüche

1. Bedienvorrichtung für eine Nutzerschnittstelle, umfassend
ein erstes zweidimensionales flächiges Element (4) und ein zweites längliches Element (5), die relativ zueinander in zumindest zwei verschiedenen Richtungen verschiebbar sind, wobei
die Längserstreckung des zweiten länglichen Elements (5) einer geordneten Gesamtmenge zugeordnet ist, und
eine Steuervorrichtung (3), mittels welcher an Hand der relativen Position des zweiten länglichen Elements (5) zu dem ersten flächigen Element (4) eine Überlappung beider Elemente (4, 5) erfassbar ist und in Abhängigkeit von dieser Überlappung zumindest ein Steuersignal mit Intervallwerten erzeugbar ist, wobei
die Intervallwerte eine Teilmenge innerhalb der Gesamtmenge definieren; wobei die Intervallwerte des Steuersignals eine Intervallbreite umfassen, die von der Größe (B) der Überlappung des ersten flächigen Elements (4) und des zweiten länglichen Elements (5) in Längsrichtung des zweiten länglichen Elements (5) abhängt; wobei an Hand der Überlappung des ersten flächigen Elements (4) und des zweiten länglichen Elements (5) ein Abschnitt auf dem zweiten länglichen Element (5) definiert ist und die Intervallwerte des Steuersignals von der Größe (B) und Position des Abschnitts innerhalb des zweiten länglichen Elements (5) abhängen; wobei
die Bedienvorrichtung eine Anzeigefläche (2), mittels welcher das erste flächige Element (4) und das zweite längliche Element (5) anzeigbar sind, und eine Eingabevorrichtung (6), mittels welcher das erste flächige Element (4) und das zweite längliche Element (5) relativ zueinander verschiebbar sind, aufweist; wobei
das erste flächige Element (4) in Abhängigkeit von der Betätigung der Eingabevorrichtung (6) zumindest teilweise ein- und/oder ausblendbar ist; wobei
das erste flächige Element (4) zumindest teilweise anzeigbar ist, wenn es mittels der Eingabevorrichtung (6) betätigt wird.

2. Bedienvorrichtung nach Anspruch 1,
**dadurch gekennzeichnet,**
**dass** die Intervallwerte des Steuersignals eine Intervallposition umfassen, die von der Position der Überlappung des ersten zweidimensionalen Elements (4) auf dem zweiten länglichen Element (5) abhängt.

3. Bedienvorrichtung nach einem der vorhergehenden Ansprüche,
**dadurch gekennzeichnet,**
**dass** das flächige Element (4) ein Dreieck ist.

4. Bedienvorrichtung nach einem der vorhergehenden Ansprüche,
**dadurch gekennzeichnet,**
**dass** das flächige Element (4) und das zweite längliche Element (5) relativ zueinander in einer Ebene zumindest in Längsrichtung des zweiten länglichen Elements (5) sowie der dazu senkrechten Richtung verschiebbar sind, wobei die Ausrichtung der beiden Elemente (4, 5) zueinander bei der Verschiebung erhalten bleibt.

5. Verfahren zum Erzeugen eines Steuersignals über eine Nutzerschnittstelle, bei dem
- ein erstes flächiges Element (4) und ein zweites längliches Element (5) auf einer Anzeigefläche angezeigt werden, wobei die Längserstreckung des länglichen Elements (5) einer geordneten Gesamtmenge zugeordnet ist,
- das erste (4) und das zweite Element (5) mittels einer Eingabevorrichtung relativ zueinander so verschoben werden, dass sich eine Überlappung der beiden Elemente (4, 5) ergibt, die von einer Steuervorrichtung erfasst wird,
- durch die Steuervorrichtung in Abhängigkeit von der Überlappung des ersten (4) und des zweiten Elements (5) zumindest ein Steuersignal mit Intervallwerten erzeugt wird, wobei die Intervallwerte eine Teilmenge innerhalb der Gesamtmenge definieren; wobei
- die Intervallwerte des Steuersignals eine Intervallbreite umfassen, die von der Größe (B) der Überlappung des ersten flächigen Elements (4) und des zweiten länglichen Elements (5) in Längsrichtung des zweiten Elements (5) abhängt; wobei
- an Hand der Überlappung des ersten flächigen Elements (4) und des zweiten länglichen Elements (5) ein Abschnitt auf dem zweiten länglichen Element (5) definiert ist und die Intervallwerte des Steuersignals von der Größe (B) und Position des Abschnitts innerhalb des zweiten länglichen Elements (5) abhängen; wobei
- die Bedienvorrichtung eine Anzeigefläche (2), mittels welcher das erste flächige Element (4) und das zweite längliche Element (5) anzeigbar sind, und eine Eingabevorrichtung (6), mittels welcher das erste flächige Element (4) und das zweite längliche Element (5) relativ zueinander verschiebbar sind, aufweist; wobei
- das erste flächige Element (4) in Abhängigkeit von der Betätigung der Eingabevorrichtung (6) zumindest teilweise ein- und/oder ausgeblendet wird; wobei
- das erste flächige Element (4) zumindest teilweise angezeigt wird, wenn es mittels der Eingabevorrichtung (6) betätigt wird.

6. Verfahren nach Anspruch 5,
**dadurch gekennzeichnet, dass**
die Intervallwerte des Steuersignals eine Intervallposition umfassen, die von der Position der Überlappung des ersten Elements (4) auf dem zweiten Element (5) abhängt.

7. Verfahren nach Anspruch 5 oder 6,
**dadurch gekennzeichnet, dass**
das Intervall die Position und die Intervallbreite der Teilmenge innerhalb der Gesamtmenge definiert.

8. Verfahren nach einem der Ansprüche 5 bis 7,
**dadurch gekennzeichnet, dass**
das flächige Element (4) ein Dreieck ist.

9. Verfahren nach einem der Ansprüche 5 bis 8,
**dadurch gekennzeichnet, dass**
beim Verschieben des ersten Elements (4) relativ zu dem zweiten Element (5) die Ausrichtung der beiden Elemente (4, 5) zueinander erhalten bleibt.

## Claims

1. Operating device for a user interface, comprising
a first two-dimensional areal element (4) and a second elongate element (5), which are displaceable relative to one another in at least two different directions, wherein the longitudinal extent of the second elongate element (5) is assigned to an ordered overall set, and
a control device (3), by means of which, on the basis of the relative position of the second elongate element (5) with respect to the first areal element (4), an overlap of the two elements (4, 5) can be detected and at least one control signal with interval values can be generated in a manner dependent on said overlap, wherein
the interval values define a subset within the overall set; wherein
the interval values of the control signal comprise an interval width that is dependent on the size (B) of the overlap between the first areal element (4) and the second elongate element (5) in a longitudinal direction of the second elongate element (5); wherein
a section on the second elongate element (5) is defined on the basis of the overlap between the first areal element (4) and the second elongate element (5), and the interval values of the control signal are dependent on the size (B) and position of the section within the second elongate element (5); wherein
the operating device has a display area (2), by means of which the first areal element (4) and the second elongate element (5) can be displayed, and an input device (6), by means of which the first areal element (4) and the second elongate element (5) are displaceable relative to one another; wherein
the first areal element (4) can be at least partially inserted and/or removed in a manner dependent on the actuation of the input device (6); wherein
the first areal element (4) can be at least partially displayed, if it is actuated by means of the input device (6).

2. Operating device according to claim 1,
**characterized in**
**that** the interval values of the control signal comprise an interval position that is dependent on the position of the overlap of the first two-dimensional element (4) on the second elongate element (5).

3. Operating device according to one of the preceding claims,
**characterized in**
**that** the areal element (4) is a triangle.

4. Operating device according to one of the preceding claims,
**characterized in**
**that** the areal element (4) and the second elongate element (5) are displaceable relative to one another in a plane at least in a longitudinal direction of the second elongate element (5) and the direction perpendicular thereto, the orientation of the two elements (4, 5) with respect to one another being maintained during the displacement.

5. Method for generating a control signal by way of a user interface, wherein
- a first areal element (4) and a second elongate element (5) are displayed on a display area, wherein the longitudinal extent of the second elongate element (5) is assigned to an ordered overall set,
- the first (4) and the second element (5) are displaced relative to one another by means of an input device in such a way as to result in an overlap between the two elements (4, 5), which is detected by a control device,
- at least one control signal with interval values is generated by means of the control device in a manner dependent on the overlap between the first (4) and the second element (5), wherein the interval values define a subset within an overall set; wherein
- the interval values of the control signal comprise an interval width that is dependent on the size (B) of the overlap between the first areal element (4) and the second elongate element (5) in a longitudinal direction of the second elongate element (5); wherein
- a section on the second elongate element (5) is defined on the basis of the overlap between the first areal element (4) and the second elongate element (5), and the interval values of the control signal are dependent on the size (B) and position of the section within the second elongate element (5); wherein
- the operating device has a display area (2), by means of which the first areal element (4) and the second elongate element (5) can be displayed, and an input device (6), by means of which the first areal element (4) and the second elongate element (5) are displaceable relative to one another; wherein
- the first areal element (4) can be at least partially inserted and/or removed in a manner dependent on the actuation of the input device (6); wherein
- the first areal element (4) can be at least partially displayed, if it is actuated by means of the input device (6).

6. Method according to claim 5,
**characterized in**
**that** the interval values of the control signal comprise an interval position that is dependent on the position of the overlap of the first element (4) on the second element (5).

7. Method according to claim 5 or 6,
**characterized in**
**that** the interval defines the position and the interval width of the subset within the overall set.

8. Method according to one of claims 5 to 7,
**characterized in**
**that** the areal element (4) is a triangle.

9. Method according to one of claims 5 to 8,
**characterized in**
**that** during the displacement of the first element (4) relative to the second element (5), the orientation of the two elements (4, 5) with respect to one another is maintained.

## Revendications

1. Dispositif de contrôle pour une interface utilisateur, comprenant
un premier élément plat (4) bidimensionnel et un deuxième élément allongé (5), lesquels peuvent être décalés l'un par rapport à l'autre dans au moins deux directions différentes,
une quantité totale ordonnée étant associée à l'extension longitudinale du deuxième élément allongé (5), et
un dispositif de commande (3), au moyen duquel peut être détecté un chevauchement des deux éléments (4, 5) à l'aide de la position relative du deuxième élément allongé (5) par rapport au premier élément plat (4) et au moins un signal de commande ayant des valeurs d'intervalle peut être généré en fonction de ce chevauchement,
les valeurs d'intervalle définissant une quantité partielle au sein de la quantité totale ;
les valeurs d'intervalle du signal de commande comprenant une largeur d'intervalle qui dépend de la taille (B) du chevauchement du premier élément plat (4) et du deuxième élément allongé (5) dans le sens longitudinal du deuxième élément allongé (5) ;
une portion étant définie sur le deuxième élément allongé (5) à l'aide du chevauchement du premier élément plat (4) et du deuxième élément allongé (5) et les valeurs d'intervalle du signal de commande dépendant de la taille (B) et de la position de la portion à l'intérieur du deuxième élément allongé (5) ; le dispositif de contrôle possédant une surface d'affichage (2), au moyen de laquelle peuvent être affichés le premier élément plat (4) et le deuxième élément allongé (5), et un dispositif de saisie (6), au moyen duquel le premier élément plat (4) et le deuxième élément allongé (5) peuvent être décalés l'un par rapport à l'autre ;
le premier élément plat (4) pouvant être au moins partiellement affiché et/ou masqué en fonction de l'actionnement du dispositif de saisie (6) ;
le premier élément plat (4) pouvant être affiché au moins partiellement lorsqu'il est actionné au moyen du dispositif de saisie (6).

2. Dispositif de contrôle selon la revendication 1,
**caractérisé en ce**
**que** les valeurs d'intervalle du signal de commande comprennent une position d'intervalle qui dépend de la position du chevauchement du premier élément bidimensionnel (4) sur le deuxième élément allongé (5).

3. Dispositif de contrôle selon l'une des revendications précédentes, **caractérisé en ce que** l'élément plat (4) est un triangle.

4. Dispositif de contrôle selon l'une des revendications précédentes, **caractérisé en ce que** l'élément plat (4) et le deuxième élément allongé (5) peuvent être décalés l'un par rapport à l'autre dans un plan au moins dans le sens longitudinal du deuxième élément allongé (5) ainsi que dans la direction perpendiculaire à celui-ci, l'orientation des deux éléments (4, 5) l'un par rapport à l'autre restant maintenue lors du décalage.

5. Procédé pour générer un signal de commande par le biais d'une interface utilisateur, selon lequel
- un premier élément plat (4) et un deuxième élément allongé (5) sont affichés sur une surface d'affichage, une quantité totale ordonnée étant associée à l'extension longitudinale du deuxième élément allongé (5),
- le premier (4) et le deuxième élément (5) sont décalés l'un par rapport à l'autre au moyen d'un dispositif de saisie de telle sorte qu'il se produit un chevauchement des deux éléments (4, 5), lequel est détecté par un dispositif de commande,
- au moins un signal de commande ayant des valeurs d'intervalle est généré par le dispositif de commande en fonction du chevauchement du premier (4) et du deuxième élément (5), les valeurs d'intervalle définissant une quantité partielle au sein de la quantité totale ;
- les valeurs d'intervalle du signal de commande comprenant une largeur d'intervalle qui dépend de la taille (B) du chevauchement du premier élément plat (4) et du deuxième élément allongé (5) dans le sens longitudinal du deuxième élément allongé (5) ;
- une portion étant définie sur le deuxième élément allongé (5) à l'aide du chevauchement du premier élément plat (4) et du deuxième élément allongé (5) et les valeurs d'intervalle du signal de commande dépendant de la taille (B) et de la position de la portion à l'intérieur du deuxième élément allongé (5) ;
- le dispositif de contrôle possédant une surface d'affichage (2), au moyen de laquelle peuvent être affichés le premier élément plat (4) et le deuxième élément allongé (5), et un dispositif de saisie (6), au moyen duquel le premier élément plat (4) et le deuxième élément allongé (5) peuvent être décalés l'un par rapport à l'autre ;
- le premier élément plat (4) étant au moins partiellement affiché et/ou masqué en fonction de l'actionnement du dispositif de saisie (6) ;
- le premier élément plat (4) étant affiché au moins partiellement lorsqu'il est actionné au moyen du dispositif de saisie (6).

6. Procédé selon la revendication 5, **caractérisé en ce que** les valeurs d'intervalle du signal de commande comprennent une position d'intervalle qui dépend de la position du chevauchement du premier élément (4) sur le deuxième élément (5).

7. Procédé selon la revendication 5 ou 6, **caractérisé en ce que** l'intervalle définit la position et la largeur d'intervalle de la quantité partielle au sein de la quantité totale.

8. Procédé selon l'une des revendications 5 à 7, **caractérisé en ce que** l'élément plat (4) est un triangle.

9. Procédé selon l'une des revendications 5 à 8, **caractérisé en ce que** lors du décalage du premier élément (4) par rapport au deuxième élément (5), l'orientation des deux éléments (4, 5) l'un par rapport à l'autre reste maintenue.
